# EUROPÄISCHE PATENTSCHRIFT

(11) **EP 0 536 430 B1**
(45) Veröffentlichungstag und Bekanntmachung des Hinweises auf die Patenterteilung: **19.02.1997**
(21) Anmeldenummer: 91116713.8
(22) Anmeldetag: 30.09.1991
(51) Int. Cl.: H04B 10/00, E05B 49/00

(54) **Verfahren zur Energieversorgung eines fernsteuernden Handsenders, z.B. für ein Kfz-Schliesssystem**
Process for the power supply of a remote control, e.g. for a car lock system
Procédé pour desservir une télécommande en énergie p.e. pour un système de verrouillage pour automobile

(43) Veröffentlichungstag der Anmeldung: 14.04.1993
(73) Patentinhaber: SIEMENS AKTIENGESELLSCHAFT, 80333 München (DE)
(72) Erfinder: Seubert, Tilmann, Dipl.-Ing., F - 31770 Coloniers (FR)

(56) Entgegenhaltungen:
- EP-A- 0 307 749
- WO-A-91/14065
- DE-A- 3 446 245

## Beschreibung

Die Erfindung geht von dem im Oberbegriff des Patentanspruches 1 definierten Verfahren aus, das für sich durch
- EP-A1-0 307 749
vorbekannt ist. Dort sind spezielle Varianten von optischen Fernübertragungen der Nachladeenergie bei einem Kfz-Schließsystem mit einem Kondensator als Energiespeicher beschrieben, um eine Batterie bzw. einen Akkumulator im Handsender möglichst zu vermeiden.

Dieser Stand der Technik betrifft ein Hauptproblem solcher Verfahren, die Zuverlässigkeit der Stromversorgung des tragbaren Handsenders :

Wenn die in seinem Energiespeicher gespeicherte Restenergie gar zu klein wird, kann der Handsender zwar noch über eine größere Entfernung ein kurzes, unkompliziertes, vielleicht schon relativ schwaches Signal zur Steuereinheit senden. Aber oft reicht diese Restenergie nicht mehr, um zuverlässig sofort auf größere Entfernung die Steuereinheit zu aktivieren. Jene Restenergie reicht vor allem oft dann nicht mehr aus, wenn der Handsender einen Wechselcode statt eines festen Code abstrahlen soll, wenn also die Elektronik im Handsender zusätzlich in sich vor der Sendung des Codes Energie verbraucht, um den zu sendenden Code in für sich bekannter Weise erst noch mit einem Mikrocomputers und einem komplizierten Algorithmus jeweils neu zu errechnen. Das alles stört besonders, wenn der Benutzer des Handsenders erwartet, daß er mit höchstem Komfort immer zuverlässig fernsteuern kann.

Daher wird bei diesem Stand der Technik der Energiespeicher des Handsenders - nämlich z.B. ein im Handsender angebrachter Kondensator - von der Steuereinheit nachgeladen, bevor dieser Handsender seinen Code abstrahlt : Die Steuereinheit des Gerätes bzw. des Objektes strahlt daher immer wieder eine Nachladeenergie ab, die den Energiespeicher des Handsenders nachlädt, solange bis der Handsender ein Quittungssignal zur Steuereinheit sendet, - erst danach unterbricht die Steuereinheit die Fernübertragung von Nachladeenergie und der Handsender sendet nun sein codiertes Signal zur Steuereinheit.

Dadurch wird es unnötig, daß immer wieder rechtzeitig (!) eine neue Batterie im Handsender angebracht werden muß oder daß immer wieder rechtzeitig ein Akkumulator aus dem Handsender zum Nachladen entnommen werden muß. Das erspart nicht nur Tätigkeiten der den Handsender benutzenden Person. Man spart auch den Platz und das Gewicht im Handsender für eine relativ große schwere Batterie oder einen relativ großen schweren Akkumulator ein. Man spart z.B. auch das Recyclieren der Batterie ein. Und man spart dem Benutzer des Handsenders die Kosten für die Besorgung neuer Batterien ein.

Die Erfindung verbessert dieses bekannte Verfahren, ohne auf die genannten Vorteile dieses Standes der Technik zu verzichten.

Die Erfindung wurde zwar zunächst ebenfalls für ein fernsteuerbares Kfz-Schließsystem entwickelt, und zwar ebenfalls um es unnötig zu machen, daß immer wieder rechtzeitig eine neue Batterie im Handsender angebracht werden muß oder daß immer wieder rechtzeitig ein Akkumulator aus dem Handsender zum Nachladen entnommen werden muß.

Die Erfindung ist aber nicht auf Schließsysteme beschränkt. Es zeigte sich nämlich nachträglich, daß die Erfindung weit darüber hinaus auch auf andere Objekte, z.B. auch auf Schließsysteme und Beleuchtungssysteme von Wohnungen und Hallen, und z.B. auch auf viele Typen von Haushaltsgeräten und Geräten der Unterhaltungselektronik anwendbar ist, also nicht nur auf das Schließsystem von Kfz, wenngleich die Erfindung besonders gut gerade für ein fernsteuerbares Kfz-Schließsystem geeignet ist.

Es sind übrigens mehrere ähnliche Verfahren zur Nachladung von Energiespeichern elektrischer Einrichtungen mittels Fernübertragung bekannt. Z.B. ist bekannt, daß Satelliten, welche in Erdumlaufbahnen kreisen, zur Energieversorgung von Landschaften eingesetzt werden sollen, wobei solche Satelliten durch Übertragung von elektromagnetischen (HF-)Wellen terrestrische Energiespeicher aufladen sollen. Ebenso sind Geräte - z.B. der Unterhaltungselektronik - mit Solarzellen bekannt, welche Sonnenlicht zur Stromversorgung ausnutzen.

Es stellte sich heraus, daß ein erheblicher Nachteil des bekannten Verfahrens darin besteht, daß der Energieverlust bei der Fernübertragung der Nachladeenergie noch viel zu hoch ist. Das belastet die Batterie oder den Akkumulator der Steuereinheit noch viel zu stark und gefährdet manchmal sogar, besonders in kalten Jahreszeiten, die Stromversorgung nicht nur der Steuereinheit, sondern auch die Stromversorgung sonstiger an derselben Batterie angeschlossener elektrischer Einrichtungen. Z.B. ein Kfz, dessen Zentralverriegelungssystem mittels eines Handsenders gesteuert wird eine solche Fernübertragung von Nachladeenergie zum Handsender aufweist, würde oft die Kfz-Batterie zu tief entladen, so daß dann zu oft nicht mehr der Motor gestartet werden könnte und auch die Zentralverriegelung nicht mehr gesteuert werden könnte.

Diesen Nachteil des Standes der Technik sollte die Erfindung mit möglichst wenig Schaltungsaufwand vermeiden, wobei aber die Erfindung trotzdem die verschiedenen beschriebenen Vorteile des Standes der Technik aufweisen sollte.

Daher löst die Erfindung die Aufgabe,
- zusätzlich Verluste der Fernübertragung der Nachladeenergie zu verringern, also den Wirkungsgrad der Fernübertragung der Nachladeenergie deutlich zu verbessern,
- nämlich zusätzlich die Belastung jener weiteren Batterie oder jenes weiteren Akkumulators, welche / welcher zum Betrieb der Steuereinheit am oder im Gerät bzw. Objekt angebracht ist, stark zu reduzieren,
- und dies mit besonders wenig Aufwand an technischen Mitteln zu erreichen,
durch den im Patentanspruch 1 definierten Gegenstand.

Die Erfindung läßt es dabei zu, daß der Energiespeicher im Handsender z.B. durch einen Kondensator mit einem besonders verlustarmen Dielektrikum gebildet werden kann. Dieser Energiespeicher kann zusätzlich unterschiedlich dimensioniert werden, je nach Bedarf :
- Der Energiespeicher des Handsenders kann eine so kleine Kapazität aufweisen und damit so wenig Raum brauchen und so wenig Gewicht haben, daß er vor jeder Aussendung eines codierten Signales nur wenig mehr an Energie speichern muß, als er für die Aussendung von einem oder mehreren Startsignalen benötigt; dabei kann auch die Steuereinheit so dimensioniert werden, daß sie nur codierte Signale mit kleinem Pegel benötigt,
   ° so daß auch der Handsender selbst auf Entfernungen von vielen Metern nur wenig Energie zum Senden der codierten Signale braucht, und
   ° so daß der Energiespeicher des Handsenders bereits mit wenig Nachladeenergie ausreichend aufgeladen werden kann;
- Der Energiespeicher dieses Handsenders kann aber auch eine entsprechend größeren Kapazität haben, nämlich so groß, daß er die Aussendung vieler codierter Signale ohne Zwischennachladung ermöglicht, so daß dann das Nachladen durch die Fernübertragung nur selten nötig ist, wobei dann diese seltene statt jedesmalige Nachladung die Gefahr verringert, daß der Energiespeicher einmal zu stark entladen wird, und wobei diese seltene Nachladung jeweils erfindungsgemäß durchführbar ist, sobald die Sendeleistung des Handsenders allzu sehr zu sinken droht :
   ° entweder automatisch, was für den Benutzer des Handsenders besonders bequem ist,
- z.B. indem die Steuereinheit den Pegel der empfangenen codierten Signale mißt und danach zu schwach empfangene codierte Signale für sich bereits als Startsignal betrachtet, oder
- indem die Elektronik im Handsender die Restenergie - z.B. die Spannung ein dem betreffenden, durch einen Kondensator gebildeten Energiespeicher - mißt und bei Bedarf das Startsignal vor der Aussendung des nächsten codierten Signales aussendet,
   ° oder auch von Hand,
- indem der Benutzer des Handsenders - z.B. mittels einer LCD-Anzeige - aufgefordert wird oder dieser Benutzer wegen erkennbar schlechterer Sendeleistung des Handsenders durch die Gebrauchsanweisung veranlaßt wird, eine bestimmte Taste ("Reaktivierungstaste", "Nottaste") des Handsenders zur Aussendung des Startsignales zu betätigen.

Die in den Unteransprüchen definierten Gegenstände gestatten, zusätzliche Vorteile zu erreichen. U.a. gestatten nämlich die zusätzlichen Maßnahmen gemäß dem Patentanspruch
- 2,: im Handsender einen Energiespeicher zu benutzen, welcher nur besonders wenig Energie speichern zu können braucht,
- 3,: die Fernsteuerung bzw. die Aktivierung der Steuereinheit notfalls auch dann noch zu ermöglichen, wenn einmal die im Energiespeicher verbliebene Restenergie doch noch zu klein war, um das Startsignal mit ausreichendem Pegel zu senden und um damit die Fernübertragung der Nachladungsenergie zu starten,
- 4,: die Batterie bzw. den Akkumulator der Steuereinheit noch stärker zu schonen, vor allem dann, wenn das Startsignal keinen komplizierten eigenen Code aufweist und damit im Prinzip von vielen anderen Handsendern anderer Personen abgestrahlt wird, welche aber eigentlich gar nicht die betreffende Steuereinheit aktivieren wollen,
- 5,: die Zuverlässigkeit des Systemes zu erhöhen, indem der Energiespeicher des Handsenders vorsorglich für eine spätere Sendung eines Startsignales - die vielleicht erst nach Tagen oder Wochen ausgelöst wird - nachgeladen wird,
- 6,: die Batterie bzw. den Akkumulator der Steuereinheit besonders stark zu schonen und die Sendeanordnung der Steuereinheit mit entsprechend wenig Hardwareaufwand dimensionieren zu können,
- 7,: vor Verlassen des später zu verschließenden Objektes prophylaktisch den Energiespeicher des Handsenders durch Fernübertragung mit besonders wenig Sendeverlust hinsichtlich der Abstrahlung der Nachladeenergie nachzuladen,
- 8,: den Energiespeicher des Handsenders selbsttätig auch dann durch Fernübertragung nachzuladen, wenn das Gerät bzw. das Objekt in Betrieb genommen wird, im Betrieb ist und / oder kurz zuvor außer Betrieb gesetzt wurde,
- 9,: den Energiespeicher des Handsenders - z.B. einer Kfz-Zentralverriegelungsanlage - selbsttätig auch dann durch Fernübertragung nachzuladen, wenn das Zündschloß betätigt wird, also z.B. wenn gerade der Motor des Kfz in Betrieb genommen wird, und / oder wenn dieser Motor soeben außer Betrieb gesetzt wurde,
- 10,: die Fernübertragung der Nachladeenergie mit besonders wenig Aufwand realisieren zu können,
- 11,: eine weitere Alternative für die Fernübertragung der Nachladeenergie auszunutzen, sowie
- 12,: eine weitere, bisher recht ungewöhnliche Alternative für die Ferntibertragung der Nachladeenergie auszunutzen,
- 13 bis 17,: entsprechende Systeme für ganz unterschiedliche Anwendungsgebiete verwenden zu können, sowie
- 18,: auch dann ein Startsignal aussenden zu können, falls die im Energiespeicher des Handesneders gespeicherte restliche Energie nicht mehr ausreicht, (nochmals) die Fernübertragung der Nachladeenergie auszulösen.

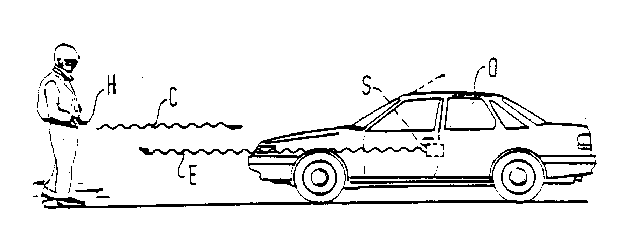

Die Erfindung und Weiterbildungen derselben werden anhand des in der Figur gezeigten Konzeptes eines Ausführungsbeispieles der Erfindung für ein Kfz weiter erläutert, wobei dieses Konzept, der Übersichtlichkeit wegen, möglichst einfach dargestellt wurde.

Die Figur soll also das erfindungsgemäße Verfahren zur Energieversorgung des tragbaren Handsenders H veranschaulichen. Der Handsender H dient zur Fernsteuerung der durch codierte Signale C gesteuerten Steuereinheit S des Kfz O, nämlich der Steuereinheit S der Zentralverriegelung des Kfz O. Dazu muß der im Handsender H angebrachte Energiespeicher - welcher z.B. durch einen Kondensator mit hochwertigem, sehr gut isolierendem Dielektrikum gebildet wird - von Zeit zu Zeit mit elektrischer Speicherenergie dadurch von der Ferne nachgeladen werden, daß diese Steuereinheit S mittels einer eigenen Sendeanordnung für begrenzte Dauern eine Nachladeenergie E zum Handsender H durch eine Ferntibertragung mittels energietransportierender Wellen sendet. Es kann sich dabei z.B. um eine elektromagnetische - also durch Hochfrequenzwellen oder Licht - oder z.B. auch um eine akustische Fernübertragung E der Nachladeenergie handeln.

Daher weist der Handsender H nicht nur eine Sendeanordnung zum Abstrahlen seiner codierten Signale auf, sondern auch eine eigene Empfangsanordnung zum Empfangen der Nachladeenergie E. Diese Empfangsanordnung weist zusätzlich einen Energiewandler oder Frequenzwandler zum Umwandeln der fernübertragenen Nachladeenergie E in die Speicherenergie auf, z.B. Siliziumdioden, Fotodioden, Piezo-Bauelemente, o.dgl.

Erfindungsgemäß beginnt die Steuereinheit S - zumindest im Regelfall - die Nachladeenergie E zum Handsender H erst dann zu senden, wenn zuvor die Steuereinheit S ein zur Nachladung aufforderndes Startsignal, vgl. C, vom Handsender H empfing. So kann der Handsender H, wenn dieser von dem in der Figur gezeigten Benutzer bedient wird, z.B. zuerst sein Startsignal C aussenden, wonach der Energiespeicher im Handsender H zuerst durch Fernübertragung E mit Nachladeenergie nachgeladen wird; erst anschließend wird das codierte Signal C zur Steuereinheit S gesendet.

Dieses Startsignal C kann an sich ganz beliebig strukturiert sein. Im einfachsten Fall stellt es nur einen kurzen, trägerfrequent übertragenen Impuls dar, der also keinen Kfz-spezifischen Code wie die codierten Signale C aufweist. Das Startsignal C kann aber bei Bedarf trotzdem durch ein Signal gebildet werden, welches mit einem dafür typischen Code moduliert wurde. Wichtig ist alleine, daß - zumindest im Regelfall - jene Restenergie, welche bis dahin im Energiespeicher des Handsenders H verblieb, ausreicht, um noch eine einmalige Aussendung - möglichst sogar noch für mehrmalige Aussendungen des Startsignales - zu ermöglichen.

Im Prinzip reicht es sogar, wenn der Handsender jedesmal "nur" seine codierten Signale aussendet - und zwar scheinbar "nur" diese codierten Signale ! - :

Wenn sich nämlich der Energiespeicher weitgehend entleerte, dann erreichen die abgestrahlten codierten Signale C die Steuereinheit S im Regelfall nur noch mit einem sehr kleinen Pegel. Die Steuereinheit S kann aber ein solches, mit besonders kleinem Pegel empfangenes codiertes Signal C für sich bereits als Startsignal C betrachten und daher sogleich die Fernübertragung E der Nachladeenergie starten, ohne zusätzlich ein andersartiges "Startsignal" empfangen zu haben. In diesem Falle braucht also der Handsender kein besonderes Startsignal auszusenden, dessen Signalinhalt sich von dem Signalinhalt eines codierten Signales C durch den Code selber unterscheidet. Eine Besonderheit dieser Verfahrensvariante besteht auch darin, daß hier die Nachladeenergie erst nach (!), und nicht vor (!), der nahezu gleichzeitigen Aussendung des codierten Signales C zur Steuereinheit S fernübertragen wird. In diesem Falle wird also der Energiespeicher im Handsender H im Regelfall lange Zeit, vielleicht Tage und Wochen lang, die nachgeladene Energie speichern, bevor der Handsender H erneut betätigt wird und dann wieder zuerst ein codiertes Signal C aussendet, bevor die Steuereinheit S dann evtl. sofort erneut eine Nachladeenergie fernüberträgt, wenn nämlich auch dieses jetzt empfangene codierte Signal C wieder einen besonders kleinen Pegel hatte.

Die Erfindung kann also vorteilhafterweise, je nach sonstigen Bedürfnissen, de facto völlig verschieden gestaltbare und verschieden nutzbare Startsignale C aufweisen. Der Konstrukteur, der ein erfindungsgemäß betriebenes System entwirft, hat also je nach Bedarf zwischen vielen Möglichkeiten frei wählen. Dabei wird erfindungsgemäß die Nachladeenergie jeweils nur für eine kurze Dauer übertragen, und zwar nur dann, wenn die Steuereinheit S zuvor ein Startsignal C empfing.

Weil man aber auch die Steuereinheit S so dimensionieren kann, daß die von ihr empfangenen codierten Signale C nur einen kleinem Pegel aufweisen müssen, kann man auch die Elektronik im Handsender H sehr stromsparend dimensionieren. Der Handsender H braucht dann sowohl zum Senden der Startsignale C als auch zum Senden der codierten Signale C nur wenig Energie aus seinem Energiespeicher, weswegen auch relativ kleine, von der Steuereinheit S ausgestrahlte Nachladeenergien E zum Nachladen des Energiespeichers des Handsenders H ausreichen - trotz auch bei der Erfindung oft noch recht hoher Fernübertragungsverluste. So kann der Handsender H durch einen sparsamen Umgang mit der Energie die Steuereinheit S auch noch auf Entfernungen von vielen Metern aktivieren, und dazu trotzdem selbst nur wenig fernübertragene Nachladeenergie E brauchen.

Beim Stand der Technik gemäß der EP-A1-0 307 749 strahlt die Steuereinheit S des Kfz O ständig durch Pulsbetrieb wiederholt, oder sogar ununterbrochen, Nachladeenergie E aus. Daher wird bei diesem Stand der Technik die Kfz-Batterie mit der Zeit deutlich belastet, so daß die Gefahr besteht, daß die Kfz-Batterie zu stark entladen wird, bevor der Kfz-Motor angelassen wird. Bei der Erfindung strahlt hingegen die Steuereinheit S des Kfz O die Nachladeenergie E nur auf Aufforderung aus, nämlich erst dann, wenn die Steuereinheit S das Startsignal empfing. Daher werden bei der Erfindung die Verluste der Übertragung der Nachladeenergie verringert, also der Wirkungsgrad der Fernübertragung der Nachladeenergie deutlich verbessert. Bei der Erfindung ist also die Gefahr vermieden, daß man später den Kfz-Motor gar nicht mehr anlassen kann, weil zuvor die Kfz-Batterie durch zu hohe Verluste für jene Fernübertragungen zu tief entladen wurde.

Dabei bleiben aber die oben beschriebenen Vorteile des Standes der Technik gemäß der EP-A1-0 307 749 erhalten : Weil bei der Erfindung unnötig ist, im Handsender H eine eigene Batterie oder einen eigenen Akkumulator als Energiespeicher anzubringen, erspart die Erfindung nicht nur dem Hersteller des Systemes einen Aufwand für einen solchen Energiespeicher. Die Erfindung erspart auch dem späteren Benutzer des Handsenders H das Gewicht und das Volumen solcher Batterien bzw. Akkumulatoren, wobei überdies das Recyclieren, das rechtzeitige Austauschen bzw. die rechtzeitige Nachladung durch ein besonderes Ladegerät entfällt.

Der z.B. durch einen Kondensator gebildete Energiespeicher der Erfindung kann unterschiedlich dimensioniert werden :

Er kann entweder so dimensioniert werden, daß er vor jeder Aussendung eines codierten Signales im Regelfall nur wenig mehr an Restenergie speichert, als er für die Aussendung von einem oder mehreren Startsignalen benötigt. Nimmt man also einen Kondensator als Energiespeicher, dann kann dieser eine kleine Kapazität und damit wenig Raum beanspruchen und wenig Gewicht aufweisen.

Er kann aber auch so dimensioniert werden, daß seine Restenergie die Aussendung vieler codierter Signale ohne zwischenzeitlicher Nachladung ermöglicht. Dann wird also der Energiespeicher des Handsenders H durch die Fernübertragung im Regelfall nur noch selten nachgeladen. In diesem Fall gestattet die Erfindung aber sogar zwei grundsätzlich verschiedene Wege zum Starten der Fernübertragung der Nachladeenergie, sobald die Sendeleistung des Handsenders allzu sehr zu sinken droht :

Man kann dann die Fernübertragung E der Nachladeenergie jeweils automatisch starten, was für den Benutzer des Handsenders besonders bequem ist. Für dieses automatische Starten gibt es für sich mehrere Wege :
- Das kann z.B. dadurch erreicht werden, daß die Steuereinheit den Pegel der empfangenen codierten Signale mißt und danach zu schwach empfangene codierte Signale als Startsignal betrachtet.
- Das kann aber auch dadurch erreicht werden, daß die Elektronik im Handsender die Restenergie - z.B. die Spannung ein dem betreffenden, durch einen Kondensator gebildeten Energiespeicher - mißt und bei Bedarf das Startsignal vor der Aussendung des nächsten codierten Signales aussendet.

Man kann dann die Fernübertragung E der Nachladeenergie aber auch gleichsam von Hand starten, wenn die Sendeleistung des Handsenders allzu sehr zu sinken droht :
- nämlich z.B. dadurch, daß der Benutzer des Handsenders - z.B. mittels einer LCD-Anzeige - aufgefordert wird oder daß dieser Benutzer wegen erkennbar schlechterer Sendeleistung des Handsenders durch die Gebrauchsanweisung veranlaßt wird, eine bestimmte Taste ("Reaktivierungstaste", "Nottaste") des Handsenders zur Aussendung des Startsignales zu betätigen.

Um den Frequenzbedarf des Systemes in für die Allgemeinheit oft angenehmer Weise niedrig machen zu können, kann man einen solchen Betrieb wählen, daß für die Fernübertragung E der Nachladeenergie und für die Aussendung C der codierten Signales jeweils dieselben Trägerfrequenzen derselben Wellenart benutzen. Man kann also sowohl für E als auch für C Licht - z.B. Infrarotlicht - jeweils derselben Frequenz benutzen. Man kann aber für E und C auch jeweils Funkfrequenzen oder Ultraschall von jeweils derselben Frequenz benutzen.

Um im Handsender einen Energiespeicher benutzen zu können, welcher nur besonders wenig Energie speichern können muß, kann man einen Betrieb wählen, bei welchem der Handsender H erst nach dem Empfang der Nachladeenergie E die codierten Signale C an die Steuereinheit S sendet. Dabei lassen sich die Elektroniken im Handsender H und in der Steuereinheit S, sowie die Pegel der codierten Signale C, des Startsignales C und der Fernübertragung E so dimensionieren, daß der Handsender H die codierten Signale C nur dann aussendet, wenn zuvor das Startsignal C die Fernübertragung E von ausreichend viel Nachladeenergie starten konnte.

Um die Fernsteuerung bzw. die Aktivierung der Steuereinheit S notfalls auch dann noch zu ermöglichen, wenn einmal die im Energiespeicher verbliebene Restenergie doch schon zu klein wurde, um das Startsignal C mit ausreichendem Pegel senden zu können und um damit die Fernübertragung E der Nachladungsenergie starten zu können, kann man auch einen Betrieb wählen, bei welchem die Steuereinheit S die Nachladeenergie E auch dann schon zu senden beginnt, wenn durch den Benutzer des Handsenders H hilfsweise ein am Objekt O angebrachter Kontakt betätigt wird, z.B. ein Kontakt am Türgriff der Fahrertüre.

Um die Batterie bzw. den Akkumulator der Steuereinheit S noch stärker zu schonen, kann man die Steuereinheit S so dimensionieren, daß die Fernübertragung E höchstens eine vorgegebene Maximaldauer lang durchgeführt wird. Danach bricht also die Steuereinheit S die Fernübertragung - zumindest vorerst - ab. Dies kann vor allem dann wichtig werden, wenn das Startsignal C keinen komplizierten eigenen Code aufweist und damit im Prinzip auch von vielen anderen, ähnlich wie die Erfindung funktionierenden Handsendern H anderer Personen abgestrahlt werden kann, wobei diese Personen aber eigentlich meistens gar nicht die betreffende Steuereinheit S aktivieren wollen. Um dann die Batterie bzw. den Akkumulator der Steuereinheit S besonders stark zu schonen, kann man zusätzlich einen Betrieb wählen, bei welchem die Steuereinheit S die Nachladeenergie E zwar nur während einer definierten Maximaldauer aussendet, wobei aber diese Maximaldauer dann sogar unterschritten wird - also die Fernübertragung E dann vorzeitig abgebrochen wird - , falls der Handsender H nach der ausreichenden Aufladung seines Energiespeichers ein Quittungssignal C aussendet, welches die Steuereinheit S empfängt und zum Unterbrachen der Fernübertragung E nutzt. Bei dieser Variante der Erfindung sendet also der Handsender H nicht nur Startsignale und codierte Signale, sondern zusätzlich Quittungssignale.

Um die Zuverlässigkeit des erfindungsgemäß betriebenen Systemes zu erhöhen, kann der Energiespeicher des Handsenders H vorsorglich nachgeladen werden, auch wenn erst vielleicht erst nach Tagen oder Wochen später sein codiertes Signal C absenden soll. Dazu kann die Steuereinheit S die Fernübertragung E der Nachladeenergie schon dann starten, wenn die Steuereinheit S die vorher vom Handsender H abgestrahlten codierten Signale C mit zu niedrigem Pegel empfing. Darauf wurde oben schon hingewiesen.

Um die Batterie bzw. den Akkumulator der Steuereinheit S besonders stark zu schonen und um die Sendeanordnung der Steuereinheit S mit entsprechend wenig Hardwareaufwand dimensionieren zu können, kann man einen Betrieb wählen, bei welchem diese Steuereinheit S die Nachladeenergie E in eine oder mehrere bestimmte Vorzugsrichtungen gerichtet fernüberträgt. Die Vorzugsrichtung wird man bevorzugt so wählen, daß sich der Benutzer des Handsenders H im Regelfall in der Vorzugsrichtung befindet, wenn er jeweils den Handsender H bedient. Die Erfindung läßt es zu, am fertigen Objekt 0 die Vorzugsrichtung benutzerindividuell, also entsprechend den besonderen Gewohnheiten des betreffenden Benutzers, so einzustellen bzw. so zu schwenken, daß in Zukunft der Energiespeicher des Handsenders besonders zuverlässig durch Fernübertragung nachgeladen wird.

Um vor Verlassen des später zu verschließenden Kfz 0, bzw. Objektes 0, prophylaktisch den Energiespeicher des Handsenders H durch Fernübertragung E mit besonders wenig Sendeverlust hinsichtlich der Abstrahlung E der Nachladeenergie nachzuladen, kann die Steuereinheit S die Nachladeenergie durch die Fernübertragung E nicht nur gelegentlich dann zum Handsender H senden, während sich der Handsender H außerhalb des verschlossenen Objektes 0 befindet, sondern gelegentlich auch dann, während sich der Handsender H noch im Inneren der Objektes O befindet. Dieses Verfahren ist besonders günstig, wenn es sich bei dem System um ein Zentralverriegelungssystem eines Kfz handelt.

Um den Energiespeicher des Handsenders H selbsttätig auch dann durch Fernübertragung E nachzuladen, wenn das Gerät O bzw. das Objekt O gerade in Betrieb genommen wird, im Betrieb ist und / oder kurz zuvor außer Betrieb gesetzt wurde, kann man auch eine am oder im Objekt O angebrachte Baueinheit gelegentlich ein Startsignal erzeugen, welches die Fernübertragung E der Nachladeenergie auslöst.

Die zuletzt beschriebene Maßnahme ist besonders günstig, wenn das Objekt = ein Kfz ist. Mann kann dann nämlich z.B. anstreben, den Energiespeicher des Handsenders H - welcher z.B. der Handsender H einer Kfz-Zentralverriegelungsanlage sein kann - selbsttätig auch dann durch Fernübertragung E nachzuladen, wenn nur das Zündschloß betätigt wird, also z.B. wenn gerade der Motor des Kfz in Betrieb genommen wird, und / oder wenn dieser Motor soeben außer Betrieb gesetzt wurde. Dazu kann dann das Zündschloß jene Baueinheit darstellen, welche das Startsignal mittelbar oder unmittelbar z.B. beim Anlassen des Motors und / oder beim Abstellen der Motorzündung auslöst.

Um die Fernübertragung E der Nachladeenergie mit besonders wenig Aufwand realisieren zu können, kann die Nachladeenergie zwischen der Steuereinheit S und dem Handsender H durch Funk E - z.B. im UKW-Bereich - fernübertragen werden.

Man kann aber auch die Nachladeenergie E zwischen der Steuereinheit S und dem Handsender H durch Licht E fernübertragen, wobei diese Art Fernübertragung auch den Vorteil hat, besonders leicht in bestimmte Vorzugsrichtungen bündelt werden zu können. Außerdem kann dann der Energiespeicher des Handsenders H nebenbei auch durch Sonnenlicht nachgeladen werden.

Eine weitere, überraschend ungewöhnliche Alternative für die Fernübertragung E ist, die Nachladeenergie zwischen der Steuereinheit S und dem Handsender H durch Ultraschall E zu übertragen. Auch hierbei kann man relativ leicht die Fernübertragung in eine Vorzugsrichtung bündeln.

Die erfindungsgemäß betriebenen Systeme kann man für ganz unterschiedliche Anwendungsgebiete verwenden : besonders, wie bereits beschrieben, z.B. für das Zentralverriegelungssystem H/S eines Kfz O, aber z.B. auch für eine mit codierten Signalen fernsteuerbare Beleuchtungsanlage H/S/O, sowie für ein fernsteuerbares Gerät H/S/O der Unterhaltungselektronik oder für ein fernsteuerbares Haushaltsgerät H/S/O, z.B. Waschmaschinen und Heizungen.

Um auch dann ein Startsignal C aussenden zu können, falls die im Energiespeicher des Handsenders H gespeicherte restliche Energie - warum auch immer - nicht mehr dazu ausreicht, - nochmals oder erstmals - die Fernübertragung E der Nachladeenergie auszulösen, kann man im Handsender H eine mechanisch betätigbare Noteinrichtung - z.B. einen kleinen, durch Handantrieb bewegbaren Stromgenerator - anbringen, um auf mechanische Weise eine Notenergie zur Aussendung des Startsignales (C) zu erzeugen. Diese Noteinrichtung gestattet also, die Fernübertragung E der Nachladeenergie auch noch in solchen Notsituationen auszulösen.

## Patentansprüche

1. Verfahren zur Energieversorgung eines tragbaren Handsenders (H), der zum drahtlosen Fernsteuern einer durch codierte Signale (C) gesteuerten Steuereinheit (S) eines Gerätes (O) oder Objektes (O) dient, wobei
- ein im Handsender (H) angebrachter Energiespeicher von Zeit zu Zeit mit elektrischer Speicherenergie dadurch von der Ferne nachgeladen wird, daß die Steuereinheit (S) mittels einer eigenen Sendeanordnung für begrenzte Zeitdauern eine Nachladeenergie (E) zum Handsender (H) durch Fernübertragung sendet, und
- der Handsender (H) eine eigene Empfangsanordnung zum Empfangen der Nachladeenergie (E) und zum Umwandeln der Nachladeenergie (E) in die Speicherenergie aufweist,
**dadurch gekennzeichnet, daß**
die Steuereinheit (S) beginnt, die Nachladeenergie (E) zum Handsender (H) zu senden, wenn zuvor die Steuereinheit (S) ein zum Nachladen aufforderndes Startsignal vom Handsender (H) empfangen hat.

2. Verfahren nach Patentanspruch 1, **dadurch gekennzeichnet,** daß der Handsender (H) erst nach dem Empfang der Nachladeenergie (E) die codierten Signale (C) an die Steuereinheit (S) sendet.

3. Verfahren nach dem Oberbegriff von Patentanspruch 1, **dadurch gekennzeichnet, daß** die Steuereinheit (S) die Nachladeenergie (E) dann zu senden beginnt, wenn ein am Objekt (O) angebrachter Kontakt betätigt wird.

4. Verfahren nach einem der vorhergehenden Patentansprüche, **dadurch gekennzeichnet,** daß die Steuereinheit (S) die Nachladeenergie (E) für eine vorgegebene Zeitdauer aussendet, jedoch höchstens solange, bis sie vom Handsender (H) ein Quittungssignal empfängt, welches der Handsender (H) nach dem erfolgreichen Aufladen seines Energiespeichers aussendet.

5. Verfahren nach einem der vorhergehenden Patentansprüche, **dadurch gekennzeichnet,** daß die Steuereinheit (S) die Nachladeenergie (E) auch dann zu senden beginnt, wenn die Steuereinheit (S) die vorher vom Handsender (H) abgestrahlten codierten Signale (C) mit zu niedrigem Pegel empfangen hat.

6. Verfahren nach einem der vorhergehenden Patentansprüche, **dadurch gekennzeichnet,** daß die Steuereinheit (S) die Nachladeenergie (E) in eine oder mehrere bestimmte Vorzugsrichtungen sendet.

7. Verfahren zum drahtlosen Fernsteuern der Steuereinheit (S) eines Schließsystems für ein betretbares Objekt (O), bevorzugt für ein Kraftfahrzeug (O) mit einem Zentralverriegelungssystem, nach einem der vorhergehenden Patentansprüche, **dadurch gekennzeichnet,** daß die Steuereinheit (S) die Nachladeenergie (E) durch Fernübertragung nicht nur dann zum Handsender (H) sendet, während sich der Handsender (H) außerhalb des verschlossenen Objektes (O) befindet, sondern auch dann, während sich der Handsender (H) im Inneren der Objektes (O) befindet.

8. Verfahren nach Patentanspruch 3, **dadurch gekennzeichnet,** daß der Kontakt im Zündschloß angeordnet ist, welches das Startsignal mittelbar oder unmittelbar beim Abstellen der Motorzündung auslöst.

9. Verfahren nach einem der vorhergehenden Patentansprüche, **dadurch gekennzeichnet,** daß die Nachladeenergie (E) zwischen der Steuereinheit (S) und dem Handsender (H) durch Funksignale übertragen wird.

10. Verfahren nach einem der Patentansprüche 1 bis 8, **dadurch gekennzeichnet,** daß die Nachladeenergie (E) zwischen der Steuereinheit (S) und dem Handsender (H) durch optische Signale übertragen wird.

11. Verfahren nach einem der Patentansprüche 1 bis 8, **dadurch gekennzeichnet,** daß die Nachladeenergie (E) zwischen der Steuereinheit (S) und dem Handsender (H) durch Ultraschallsignale übertragen wird.

12. System (H, S) zur Energieversorgung eines tragbaren Handsenders (H), der zum drahtlosen Fernsteuern einer durch codierte Signale (C) gesteuerten Steuereinheit (S) eines Gerätes (O) oder Objektes (O) dient, wobei
- der Handsender (H) einen Energiespeicher aufweist, der von Zeit zu Zeit mit elektrischer Speicherenergie dadurch von der Ferne nachgeladen wird, daß die Steuereinheit (S) mittels einer eigenen Sendeanordnung für begrenzte Zeitdauern eine Nachladeenergie (E) zum Handsender (H) durch Fernübertragung sendet, und
- der Handsender (H) eine eigene Empfangsanordnung zum Empfangen der Nachladeenergie (E) und zum Umwandeln der Nachladeenergie (E) in die Speicherenergie aufweist,
**dadurch gekennzeichnet, daß**
der Handsender (H) eine Sendeanordnung aufweist, die ein Startsignal aussendet, durch dessen Empfang die Steuereinheit (S) aufgefordert wird, die Nachladeenergie (E) zum Handsender (H) zu senden.

13. System (H, S) nach Patentanspruch 12, **dadurch gekennzeichnet,** daß es das Zentralverriegelungssystem (H, S) eines Kraftfahrzeugs (O) ist.

14. System (H, S) nach Patentanspruch 12, **dadurch gekennzeichnet,** daß es eine fernsteuerbare Beleuchtungsanlage (O) ist.

15. System (H, S) nach Patentanspruch 12, **dadurch gekennzeichnet,** daß es ein fernsteuerbares Gerät (O) der Unterhaltungselektronik ist.

16. System (H, S) nach Patentanspruch 12, **dadurch gekennzeichnet,** daß es ein fernsteuerbares Haushaltsgerät (O) ist.

17. System (H, S) nach einem der vorhergehenden Patentansprüche, **dadurch gekennzeichnet,** daß der Handsender (H) eine Noteinrichtung enthält, welche gestattet auf mechanische Weise eine Notenergie zum Aussenden des Startsignals zu erzeugen.

## Claims

1. Method for supplying power to a portable hand-held transmitter (H) which is used for wire-free remote control of a control unit (S), which is controlled by encoded signals (C), of an apparatus (O) or object (O),
- an energy store which is fitted in the hand-held transmitter (H) being remotely recharged from time to time with stored electrical energy in that the control unit (S) transmits, by means of a dedicated transmitting arrangement, recharging energy (E) for limited time durations to the hand-held transmitter (H) by means of remote transmission, and
- the hand-held transmitter (H) having a dedicated receiving arrangement for receiving the recharging energy (E) and for conversion of the recharging energy (E) into the storage energy,
characterized in that the control unit (S) starts to transmit the recharging energy (E) to the hand-held transmitter (H) when the control unit (S) has previously received from the hand-held transmitter (H) a start signal which requests recharging.

2. Method according to Patent Claim 1, characterized in that the hand-held transmitter (H) does not transmit the encoded signals (C) to the control unit (S) until it has received the recharging energy (E).

3. Method according to the precharacterizing clause of Patent Claim 1, characterized in that the control unit (S) starts to transmit the recharging energy (E) when a contact which is fitted to the object (O) is operated.

4. Method according to one of the preceding patent claims, characterized in that the control unit (S) transmits the recharging energy (E) for a predetermined time duration, but at most until it receives from the hand-held transmitter (H) an acknowledgement signal which the hand-held transmitter (H) transmits after its energy store has been successfully charged.

5. Method according to one of the preceding patent claims, characterized in that the control unit (S) also starts to transmit the recharging energy (E) when the control unit (S) has received those encoded signals (C) which are transmitted previously by the hand-held transmitter (H) at an excessively low level.

6. Method according to one of the preceding patent claims, characterized in that the control unit (S) transmits the recharging energy (E) in one or more specific preferred directions.

7. Method for wire-free remote control of the control unit (S) of a lock system for an object (O) which can be entered, preferably for a motor vehicle (O) having a central locking system, according to one of the preceding patent claims, characterized in that the control unit (S) transmits the recharging energy (E) by remote transmission to the hand-held transmitter (H) not only while the hand-held transmitter (H) is located outside the locked object (O) but also while the hand-held transmitter (H) is located in the interior of the object (O).

8. Method according to Patent Claim 3, characterized in that the contact is arranged in the ignition lock, which ignition lock initiates the start signal with a delay or immediately after the engine ignition has been switched off.

9. Method according to one of the preceding patent claims, characterized in that the recharging energy (E) is transmitted between the control unit (S) and the hand-held transmitter (H) by means of radio signals.

10. Method according to one of Patent Claims 1 to 8, characterized in that the recharging energy (E) is transmitted between the control unit (S) and the hand-held transmitter (H) by means of optical signals.

11. Method according to one of Patent Claims 1 to 8, characterized in that the recharging energy (E) is transmitted between the control unit (S) and the hand-held transmitter (H) by means of ultrasound signals.

12. System (H, S) for supplying power to a portable hand-held transmitter (H) which is used for wire-free remote control of a control unit (S), which is controlled by encoded signals (C), of an apparatus (O) or object (O),
- the hand-held transmitter (H) having an energy store which is remotely recharged from time to time with stored electrical energy in that the control unit (S) transmits, by means of a dedicated transmitting arrangement, recharging energy (E) for limited time durations to the hand-held transmitter (H) by means of remote transmission, and
- the hand-held transmitter (H) having a dedicated receiving arrangement for receiving the recharging energy (E) and for conversion of the recharging energy (E) into the storage energy,
characterized in that the hand-held transmitter (H) has a transmitting arrangement which transmits a start signal whose reception requests the control unit (S) to transmit the recharging energy (E) to the hand-held transmitter (H).

13. System (H, S) according to Patent Claim 12, characterized in that said system (H, S) is the central locking system (H, S) of a motor vehicle (O).

14. System (H, S) according to Patent Claim 12, characterized in that said system (H, S) is a remote control lighting system (O).

15. System (H, S) according to Patent Claim 12, characterized in that said system (H, S) is a remot control apparatus (O) for entertainment electronics.

16. System (H, S) according to Patent Claim 12, characterized in that said system (H, S) is a remote control domestic apparatus (O).

17. System (H, S) according to one of the preceding patent claims, characterized in that the hand-held transmitter (H) contains an emergency device which allows emergency power to be produced in a mechanical manner for the transmission of the start signal.

## Revendications

1. Procédé d'alimentation en énergie d'un émetteur manuel portatif (H), servant à télécommander sans fil une unité de commande (S), commandée par signaux codés (C), d'un appareil (O) ou d'un objet (O), dans lequel
- un dispositif de stockage d'énergie, placé dans l'émetteur manuel (H), est rechargé périodiquement à distance avec de l'énergie électrique stockable, l'unité de commande (S) émettant, au moyen d'un dispositif d'émission propre, pour des durées limitées, une énergie de recharge (E) vers l'émetteur manuel (H) par une transmission à distance, et
- l'émetteur manuel (H) comporte un dispositif de réception propre, destiné à recevoir l'énergie de recharge (E) et à la convertir en énergie stockable,
caractérisé en ce que
l'unité de commande (S) commence à envoyer l'énergie de recharge (E) à l'émetteur manuel (H) si, au préalable, l'unité de commande (S) a reçu de l'émetteur manuel (H) un signal de démarrage initiateur de recharge.

2. Procédé suivant la revendication 1, caractérisé en ce que l'émetteur manuel (H) émet les signaux codés (C) vers l'unité de commande (S) seulement après réception de l'énergie de recharge (E).

3. Procédé conforme au préambule de la revendication 1, caractérisé en ce que l'unité de commande (S) commence à émettre l'énergie de recharge (E) quand un contact placé sur l'objet (O) est actionné.

4. Procédé suivant l'une des revendications précédentes, caractérisé en ce que l'unité de commande (S) émet l'énergie de recharge (E) pour une durée prédéfinie, mais, au plus, jusqu'à ce qu'elle reçoive de l'émetteur manuel (H) un signal d'accusé de réception que l'émetteur manuel (H) envoie après le chargement, terminé avec succès, de son dispositif de stockage d'énergie.

5. Procédé suivant l'une des revendications précédentes, caractérisé en ce que l'unité de commande (S) commence à émettre également l'énergie de recharge (E) quand l'unité de commande (S) a reçu, avec un niveau trop bas, les signaux codés (C) émis préalablement par l'émetteur manuel (H).

6. Procédé suivant l'une des revendications précédentes, caractérisé en ce que l'unité de commande (S) émet l'énergie de recharge (E) dans une ou plusieurs directions préférentielles.

7. Procédé pour télécommander sans fil l'unité de commande (S) d'un système de fermeture destiné à un objet accessible (O), de préférence un véhicule automobile (O) comportant un système central de verrouillage, suivant l'une des revendications précédentes,
caractérisé en ce que
l'unité de commande (S) émet l'énergie de recharge (E) par transmission à distance vers l'émetteur manuel H, non seulement pendant que l'émetteur manuel (H) se trouve en dehors de l'objet (O) fermé, mais aussi pendant que l'émetteur manuel (H) se trouve à l'intérieur de l'objet (O).

8. Procédé suivant la revendication 3, caractérisé en ce que le contact est disposé dans la serrure commandant l'allumage, laquelle émet directement ou indirectement le signal de démarrage lorsqu'on arrête le moteur.

9. Procédé suivant l'une des revendications précédentes, caractérisé en ce que l'énergie de recharge (E) est transmise entre l'unité de commande (S) et l'émetteur manuel (H) par signaux radio.

10. Procédé suivant l'une des revendications 1 à 8, caractérisé en ce que l'énergie de recharge (E) est transmise entre l'unité de commande (S) et l'émetteur manuel (H) par signaux optiques.

11. Procédé suivant l'une des revendications 1 à 8, caractérisé en ce que l'énergie de recharge (E) est transmise entre l'unité de commande (S) et l'émetteur manuel (H) par signaux ultrasonores.

12. Système (H, S) d'alimentation en énergie d'un émetteur manuel portatif (H), servant à télécommander sans fil une unité de commande (S), commandée par signaux codés (C), d'un appareil (O) ou d'un objet (O), dans lequel
- l'émetteur manuel (H) comporte un dispositif de stockage d'énergie qui est périodiquement rechargé à distance, avec de l'énergie électrique stockable, l'unité de commande (S) émettant, par télétransmission, pour des durées limitées, une énergie de recharge (E) vers l'émetteur manuel (H) au moyen d'un dispositif émetteur propre, et
- l'émetteur manuel (H) comporte un dispositif de réception propre destiné à recevoir l'énergie de recharge (E) et à la convertir en énergie stockable,
caractérisé en ce que
l'émetteur manuel (H) comporte un dispositif émetteur qui envoie un signal de démarrage, en réponse à la réception duquel l'unité de commande (S) est commandée d'émettre l'énergie de recharge (E) vers l'émetteur manuel (H).

13. Système (H, S) suivant la revendication 12, caractérisé en ce qu'il constitue le système de verrouillage central (H, S) d'un véhicule automobile (O).

14. Système suivant la revendication 12, caractérisé en ce qu'il constitue un dispositif d'éclairage télécommandé (O).

15. Système (H, S) suivant la revendication 12, caractérisé en ce qu'il constitue un appareil télécommandé (O) de l'électronique du spectacle.

16. Système (H, S) suivant la revendication 12, caractérisé en ce qu'il constitue un appareil ménager télécommandé (O).

17. Système (H, S) suivant l'une des revendications précédentes, caractérisé en ce que l'émetteur manuel (H) comporte un dispositif de secours qui permet d'engendrer avec des moyens mécaniques une énergie de secours pour émettre le signal de démarrage.
